# EUROPÄISCHE PATENTSCHRIFT

(11) **EP 3 959 294 B1**
(45) Veröffentlichungstag und Bekanntmachung des Hinweises auf die Patenterteilung: **15.11.2023**
(21) Anmeldenummer: 20720067.6
(22) Anmeldetag: 24.04.2020
(51) Int. Cl.: C10G 1/02, C10G 1/08, C10G 1/10

(54) **VERÖLUNGSVERFAHREN**
OILING METHOD
PROCÉDÉ DE DÉPOLYMÉRISATION

(30) Priorität: 25.04.2019 EP 19171126
(43) Veröffentlichungstag der Anmeldung: 02.03.2022
(73) Patentinhaber: TUBIS Engineering GmbH, 80331 München (DE)
(72) Erfinder: LÖW, Peter, 80331 München (DE)
(74) Vertreter: Ter Meer Steinmeister & Partner
(86) Internationale Anmeldenummer: PCT/EP2020/061448
(87) Internationale Veröffentlichungsnummer: WO 2020/216893

(56) Entgegenhaltungen:
- EP-A1- 3 260 181
- US-A- 6 011 187
- US-A1- 2007 062 104
- US-A1- 2012 149 954
- US-A1- 2018 273 848
- US-B2- 7 905 990
- Johann Stichlmair: "Distillation, 3. Processes" In: "Ullmann's Encyclopedia of Industrial Chemistry", 15. April 2010 (2010-04-15), Wiley-VCH, Weinheim, XP055525535, ISBN: 978-3-527-30673-2 DOI: 10.1002/14356007.o08_o02, Seite 482 - Seite 484

## Beschreibung

Die vorliegende Erfindung betrifft ein Verfahren zur Verölung von im Wesentlichen organischen Ausgangsprodukten mit höherer Molekülmasse, bei dem durch die Einwirkung von hohen Temperaturen Kohlenwasserstoffe, vorzugsweise in flüssiger oder halbfester Form, sowie ein Reststoff mit hohem Kohlenstoffanteil erhalten werden.

Mit Sicht auf die steigende Menge der in der Industrie hergestellten Güter rückt nach deren Verwendung die Wiederverwertung bzw. das Recycling fortwährend mehr in den Fokus. Viele dieser Güter sind beispielsweise aus organischen Produkten wie aus Kunststoffen und/oder Kunststoffverbundwerkstoffen gefertigt, sodass insbesondere der Wiederverwertung bzw. dem Recycling dieser Produktklassen eine besondere Bedeutung zukommt. Auf der anderen Seite steigt der Bedarf an Produkten, welche beispielsweise als Kraftstoffe und/oder Ausgangsstoffe für die chemische Synthese eingesetzt werden können.

Bei der Verölung von organischen Produkten wird beiden oben genannten Bedürfnissen Rechnung getragen. Das Prinzip einer Verölung beruht darauf, dass bei organischen Ausgangsstoffen mit hoher Molekülmasse wie zum Beispiel biologischen Rest- wie auch industriellen Wert- und Reststoffen durch die Einwirkung von hohen Temperaturen bis zu 900 °C und unter weitestgehendem Sauerstoffausschluss ein Bindungsbruch bzw. Bindungsbrüche erzwungen werden, sodass kleinere Moleküle mit geringerer Molekülmasse entstehen.

Ein Beispiel der Verölung ist eine katalytische, drucklose Verölung (auch thermokatalytische Niedertemperaturkonvertierung genannt), welche im Wesentlichen ein Verfahren zur Depolymerisation von künstlichen oder natürlichen Polymeren und langkettigen Kohlenwasserstoffen ist. Diese werden unter Zusatz eines Katalysators bei Temperaturen von weniger als 400 °C ohne Überdruck und bevorzugt unter Luftabschluss in kurzkettigere, aliphatische oder aromatische Kohlenwasserstoffe umgewandelt, wobei der Wirkungsgrad bzw. die Ausbeute bei energiereichen Kunststoffen und Ölen in der Regel höher ist als bei Biomasse. Wie erwähnt können alle hochenergetischen Stoffe, die Kohlenwasserstoffe enthalten, als Ausgangsmaterial dienen. Beispiele hierfür sind Pflanzenrückstände, Holz, Stroh und Tierabfälle als biologische Produkte sowie Altöl, Festrückstände, Gummi, Klärschlämme und insbesondere die oben erwähnten Kunststoffe als industrielle Produkte. Anorganische Produkte wie Metalle, Steine sowie sonstige Verunreinigungen sollten vorher entfernt werden. Die bei den hohen Temperaturen erzeugten Gase können durch Kondensation in die verschiedenen Fraktionen getrennt werden.

Die Pyrolyse bzw. pyrolytische Zersetzung kann als weiteres Beispiel für eine Verölung betrachtet werden, wobei die gleichen wie oben genannten Ausgangsstoffe eingesetzt werden. Die Pyrolyse beruht auf einer thermo-chemischen Spaltung dieser Ausgangsstoffe bei Temperaturen von bis zu 900 °C, wobei kein zusätzlicher Sauerstoff zugeführt wird. Die erhaltenen Produkte können Gase, Flüssigkeiten und Feststoffe sein, wobei insbesondere die Flüssigkeiten und Wachse/Paraffine destillativ in die verschiedenen Fraktionen getrennt werden können: Das bedeutet, dass eine fraktionierende Kondensation bei unterschiedlichen Temperaturen erfolgt.

In der EP 3 260 181 A1 wird ein Verfahren zum thermischen Cracken eines Ausgangsmaterials aus Kunststoffmaterialien, insbesondere Abfallmaterialien, beschrieben. Dieses umfasst die folgenden Schritte: Schmelzen des Ausgangsmaterials, Befördern des geschmolzenem Ausgangsmaterials in eine Pyrolysekammer, wo das geschmolzene Ausgangsmaterial nach Verdrängung des Sauerstoffstoffs in einer im Wesentlichen inerten Atmosphäre erhitzt wird, um es in Pyrolysegase umzuwandeln. Zudem umfasst das Verfahren die folgenden weiteren Schritte: Einleiten der Pyrolysegase aus der Pyrolysekammer in eine Bodenrückflusskolonne, die an ihrem oberen Ende einen Teilkondensator umfasst, Zurückführen von in der Bodenrückflusskolonne kondensierten Pyrolysegasen in die Pyrolysekammer und Destillieren von Pyrolysegasen, die den Teilkondensator der Rückflusskolonne verlassen, um ein oder mehrere Produkte zu erhalten, welche als Brennstoffe geeignet sind. Allerdings bildet sich dabei in der Pyrolysekammer auch kohlenstoffhaltige künstliche Kohle als Nebenprodukt. Nach Beendigung der Pyrolyse muss bis zum Abkühlen dieser künstlichen Kohle gewartet werden, bis diese aus der Pyrolysekammer entnommen werden kann, um die Kammer für nachfolgende Chargen wieder einsatzbereit zu machen. Somit scheint das beschriebene Verfahren noch in einigen Punkten wie einem anpassbaren Einsatz durch kontinuierlichen Betrieb, einer variablen Materialdosierung, der Sicherstellung einer vollständig inerten Atmosphäre unter Sauerstoffausschluss in der Pyrolysekammer sowie dem Abtrennen von Stäuben und Schwebteilchen aus dem Pyrolysegas vor dessen fraktionierenden Verflüssigung verbesserungswürdig.

US 2018/273848 A1 beschreibt ein Pyrolyseverfahren, welches bei Temperaturen von 500 °C bis 750 °C unter Vakuum durchgeführt wird. Hierzu werden die Ausgangsstoffe wie Polyethylen und Polypropylen vor dem Pyrolyseschritt pelletiert.

US 6,011,187 beschreibt ein Verfahren, in welchem die Ausgangsstoffe zweistufig bei unterschiedlichen Temperaturen vergast werden, wobei der Wärmeübergang durch den direkten Kontakt der Ausgangsstoffe mit Sand erfolgt. In der ersten Stufe werden die Ausgangsstoffe mit Sand und/oder Additiven gemischt und auf 250 °C bis 350 °C erhitzt, um im Wesentlichen Halogene wie Chlor abzutrennen. In der zweiten Stufe wird die Mischung mit dem Sand auf 350 °C bis 500 °C zur Erzeugung von Pyrolysegas erhitzt. Der im Sand verbleibende Koks kann nach der zweiten Stufe im Sand verbrannt werden. US 2007/062104 A1 beschreibt ein speziell abgewandeltes Verfahren der Vakuumpyrolyse. Der Pyrolysereaktor arbeitet wie ein Kolbenmotor, d.h. er erzeugt abwechselnd Vakuum und Druck, wobei bei 600 °C im Vakuum die Vergasung und im anschließenden Verdichtungshub der Austrag von Pyrolysegas und Koks erfolgt.

Bei einem solchen Verfahren können häufig Probleme wie der Verschleiß des Kolbens und des Zylinders des Pyrolysereaktors auftreten.

US 7 905 990 B2 beschreibt ein Verfahren, bei dem Holz (Biomasse) als Ausgangsprodukt zur Erzeugung eines Pyrolysegases verwendet wird. Hierzu wird das Ausgangsprodukt im Wesentlichen unter Sauerstoffausschluss in den Reaktor überführt und dort erhitzt. Das entstandene Pyrolysegas wird zur Gewinnung von getrennten flüssigen Fraktionen an Kohlenwasserstoffen einer Kolonne zugeführt.

Damit besteht weiterhin ein Bedarf an flexiblen einsetzbaren Verölungsverfahren, z.B. an einem Verfahren, das kontinuierlich und/oder unter Ausschluss von Sauerstoff betrieben werden kann.

Daher liegt der vorliegenden Erfindung die Aufgabe zugrunde, ein Verölungsverfahren zur Verfügung zu stellen und dabei die vorgenannten Nachteile des Standes der Technik zu überwinden.

Insbesondere soll ein Verölungsverfahren bereitgestellt werden, welches im kontinuierlichen Betrieb dauerhaft eingesetzt werden kann.

Weiterhin soll ein Verfahren bereitgestellt werden, in welchem nicht ein hohes Maß an Aufarbeitung für die Ausgangsstoffe, wie beispielweise eine Pelletierung derselbigen, benötigt wird. Insbesondere sollen auch verschleißende Ausgangsstoffe und/oder Ausgangsstoffe in gegebenenfalls weichem, schwammigem Zustand eingesetzt werden können.

Des Weiteren soll neben dem Sauerstoffausschluss in der Pyrolysekammer (Reaktor) ebenfalls ein Sauerstoffausschluss bei der Zufuhr der Ausgangsprodukte in die Pyrolysekammer als auch bei der Ausschleusung des kohlenstoffhaltigen Reststoffes aus der Pyrolysekammer, insbesondere auch beim kontinuierlichen Betrieb, gewährleistet werden.

Zudem soll ein Verfahren mit einem im Wesentlichen energieautarken Betrieb zur Verfügung gestellt werden.

Des Weiteren soll durch eine Abtrennung von ungewünschten Nebenprodukten wie Stäuben und Aschen aus dem entstandenen Pyrolysegas eine vereinfachte Reinigung/Kondensation des Pyrolysegases gewährleistet werden.

Mindestens eine dieser Aufgaben wird durch die vorliegende Anmeldung gemäß den Ansprüchen gelöst.

Somit ist der Gegenstand der vorliegenden Erfindung ein kontinuierliches Verfahren zur Herstellung von Kohlenwasserstoffen umfassend die Schritte
(a) Bereitstellen eines organischen Ausgangsprodukts,
(b) Überführen des organischen Ausgangsprodukts in einen Reaktor,
(c) Erhitzen des Ausgangsprodukts, um ein Pyrolysegas zu erzeugen,
(d) Zuführen des Pyrolysegases einer zwei- oder mehrteiligen Kolonne unter Erhalt von getrennten flüssigen und/oder halbfesten Fraktionen an Kohlenwasserstoffen,
(e) Gewinnen der in Schritt (d) erhaltenen getrennten Kohlenwasserstoffe,

wobei Schritte (b) und (c) in der Abwesenheit von Sauerstoff und unter Inertgas durchgeführt werden,
wobei in Schritt (c) das Ausgangsprodukt auf 400 °C bis 600 °C erhitzt wird,
wobei im ersten Teil der zwei- oder mehrteiligen Kolonne die Strömungsgeschwindigkeit des Pyrolysegases geringer ist als in dem darauffolgenden zweiten Teil der zwei- oder mehrteiligen Kolonne,
wobei das Ausgangsprodukt ein Kunststoff oder eine Mischung von Kunststoffen ist, und
wobei der zweite Teil der zwei- oder mehrteiligen Kolonne eine Rektifikationskolonne ist.

In der obenerwähnten EP 3 260 181 A1 wie auch im Laborbetrieb wird die Verölung meistens im Batchbetrieb durchgeführt. Dazu wird jeweils eine Charge des Ausgangsmaterials in den Reaktor überführt und dort erhitzt, um das Pyrolysegas zu erzeugen, welches anschließend destillativ in die entsprechenden Fraktionen getrennt wird. Danach kann dann der Reaktor erneut beschickt und die weiteren Schritte ebenfalls erneut durchgeführt werden.

Im Gegensatz hierzu handelt es sich beim vorliegenden Verfahren um ein kontinuierliches Verfahren. Das bedeutet, dass sowohl die kontinuierliche Bestückung des Reaktors mit dem Ausgangprodukt wie auch ein kontinuierlicher Betrieb des Reaktors und die Zuführung des entstandenen Pyrolysegases zur zwei- oder mehrteiligen Kolonne sowie die kontinuierliche Gewinnung der Kohlenwasserstoffe gewährleistet wird. Weiterhin kann ebenfalls der kohlenstoffhaltige Reststoff (auch als künstliche Kohle oder Koks bezeichnet) fortwährend unter Sauerstoffabschluss aus dem Reaktor entnommen werden, ohne dass hierzu das Verfahren unterbrochen oder gar vollständig abgebrochen werden muss.

In einer bevorzugten Ausführungsform enthalten die im Schritt (e) erhaltenen Kohlenwasserstoffe aliphatische und aromatische Kohlenwasserstoffe mit 1 bis 75 Kohlenstoffatomen, bevorzugt 2 bis 60 Kohlenstoffatomen, mehr bevorzugt 3 bis 40 Kohlenstoffatomen, insbesondere 6 bis 30 Kohlenstoffatomen. Diese Kohlenwasserstoffe können beispielsweise die dem Fachmann bekannten Alkane, Cycloalkane, Cycloparaffine sowie aromatische Verbindungen umfassen. Bevorzugt liegen die Kohlenwasserstoffe bei 23 °C und 101,325 kPa (Normaldruck) in fester oder flüssiger Form vor, bevorzugt in flüssiger Form. Die bevorzugt erzeugten Produkte liegen im Siedebereich von Diesel, Benzin und Wachsen/Paraffinen.

In Schritt a) wird ein organisches Ausgangsprodukt bereitgestellt. Im Rahmen dieser Erfindung sind organische Ausgangsprodukte Stoffe, die auf Kohlenstoff und Wasserstoff basieren und darüber hinaus noch Elemente wie Sauerstoff, Stickstoff, Schwefel und Halogen enthalten können. Die organischen Ausgangsprodukte können auch als Ersatzbrennstoffe oder Sekundärbrennstoffe bezeichnet werden, da sie durch Verbrennung auch zur Gewinnung von thermischer Energie eingesetzt werden könnten.

Beispiele organische Ausgangsprodukte sind Kunststoffe, die z.B. aus der Abfallaufbereitung von Haus- und Gewerbeabfällen, Produktionsabfällen und Recycling von Altautos gewonnen werden.

Als organisches Ausgangsprodukt wird in dem vorliegenden Verfahren Kunststoff oder eine Mischung von Kunststoffen eingesetzt.

Kunststoffe sind Werkstoffe, die hauptsächlich aus Makromolekülen bestehen. Die Kunststoffe werden umgangssprachlich häufig auch als Plastik bezeichnet. In einer bevorzugten Ausführungsform ist der Kunststoff ein Polymer. Das Polymer ist aus einer oder mehreren Struktureinheit(en), den sogenannten konstitutionellen Repetiereinheiten, aufgebaut. In dem vorliegenden Verfahren können die dem Fachmann bekannten Kunststoffe bzw. Polymere eingesetzt werden.

Beispiele für Polymere sind Polyester wie Polybutylenterephthalat, Polyethylenterephthalat, Polyethylennaphthalat und Polycarbonate; Polyether wie Polyalkylenglycolether, Polyethylenglycol, Polyoxymethylen, Polyoxymethylendimethylether, Polypropylenglycol, Polytetrahydrofuran und Polyvinylether; Polyamide wie PA612 (aus Hexamethylendiamin und Dodecandisäure), PA11 (aus 11-Aminoundecansäure), PA12 (aus Laurinlactam oder ω-Aminododecansäure) und PA 6/12 (aus Caprolactam und Laurinlactam); substituierte und nicht-substituierte Polyalkylene wie Polyethylen, Polypropylen, Polyvinylacetat, Polyvinylalkohol, Polyvinylchlorid und Poly(alkyl)meth(acrylate) sowie Polyurethane und Copolymere davon.

Bevorzugt werden Polypropylen (PP); Polyethylen (PE), Polyethylenterephthalat (PET), Polyamide (PA), Acryl-Butadien-Styrol-Copolymer (ABS), Polybutylenterephthalat (PBT) sowie Mischungen daraus als organische Ausgangsprodukte eingesetzt.

Mehr bevorzugt wird als Kunststoff ein Polyalkylen eingesetzt. Beispiele für Polyalkylene sind Polyethylen, Polypropylen und Copolymere daraus.

Bevorzugt enthalten die organischen Ausgangsprodukte Chlorid in einer Menge von weniger als 1.0 Gew.% und/oder Quecksilber in einer Menge von weniger als 1,2 mg/kg Ausgangsprodukt und/oder Thallium in einer Menge von weniger als 2,0 mg/kg Ausgangsprodukt und/oder Wasser in einer Menge von weniger als 15,0 Gew.%, bevorzugt weniger als 10 Gew.%, mehr bevorzugt weniger als 5 Gew.%. In einer bevorzugten Ausführungsform kann der vorstehend genannte Wassergehalt durch Trocknen des organischen Ausgangsprodukts beispielsweise unter vermindertem Druck, vorzugsweise bei 50 bis 600 mbar, und/oder bei erhöhter Temperatur, vorzugsweise bei 40 °C bis 70 °C, erreicht werden.

Weiterhin liegt das organische Ausgangsprodukt bevorzugt mit einer Korngröße von weniger als 60 mm, mehr bevorzugt von weniger als 30 mm, insbesondere von weniger als 25 mm vor, wodurch unter anderem ein problemloses Überführen in den Reaktor (Schritt (b)) gewährleistet wird. Alternativ, wenn das Ausgangsprodukt in Form einer Folie vorliegt, beträgt die Fläche der Folie bevorzugt weniger als 0,25 m², mehr bevorzugt weniger als 0,2 m², insbesondere weniger als 0,1 m². Die obengenannte Korngröße bzw. die Fläche der Folie können durch die dem Fachmann bekannten Zerkleinerungsverfahren wie beispielsweise Schneiden, Reißen, Mahlen und Sieben erreicht werden.

Bevorzugt weist das organische Ausgangsprodukt eine Energiedichte (einen Heizwert) von 15 bis 40 MJ/kg, bevorzugt von 18 bis 35 MJ/kg insbesondere von 25 bis 30 MJ/kg auf.

Die Ausgangsstoffe in Schritt a) brauchen nicht über das gebräuchlichste Maß der Aufbereitung hinaus behandelt zu werden. Insbesondere bevorzugt ist, dass die Ausgangstoffe nicht pelletiert werden müssen.

In einer bevorzugten Ausführungsform kann dem organischen Ausgangsprodukt ein Katalysator zugesetzt werden. Das Zusetzen des Katalysators kann vor dem Überführen bzw. dem direkten Eintragen des organischen Ausgangsprodukts in den Reaktor oder aber im Reaktor selbst erfolgen, bevorzugt kann der Katalysator dem organischen Ausgangsprodukt vor dem Überführen bzw. dem direkten Eintragen des organischen Ausgangsprodukts in den Reaktor zugesetzt werden.

Ein Katalysator ist ein Stoff, der durch die Verringerung der Aktivierungsenergie die Reaktionsgeschwindigkeit einer chemischen Reaktion erhöht, ohne dabei selbst verbraucht zu werden.

Bei dem vorliegenden Verfahren können die entsprechenden handelsüblichen Katalysatoren wie beispielsweise Zeolithe auf Alumosilikatbasis eingesetzt werden.

In einer bevorzugten Ausführungsform werden Rotschlamm, Flugasche, Bauxit, Mullit, Zeolithe, bevorzugt der ZSM-Serie, insbesondere der ZSM-5 Serie, FCC-Katalysatoren ("fluid catalytic cracking" Katalysatoren), Hämatit, Eisen(II)oxid, Eisen oder Mischungen davon als Katalysator eingesetzt.

In einer mehr bevorzugten Ausführungsform wird Flugasche, insbesondere aktivierte Flugasche, als Katalysator eingesetzt. Aktivierte Flugasche ist eine Flugasche, welche einer dem Fachmann bekannten Vorbehandlung unterzogen wurde. Beispielsweise wurde Flugasche dazu gesiebt, mit NaOH gemischt, kalziniert (geschmolzen), gemahlen, mit Wasser versetzt, gehärtet, filtriert, gewaschen und getrocknet.

In einer alternativ mehr bevorzugten Ausführungsform wird Rotschlamm als Katalysator eingesetzt. Rotschlamm ist ein Rückstand, der zum Beispiel bei der Bauxitverarbeitung nach dem Bayer-Verfahren zur Gewinnung von Aluminiumoxid entstehen kann. Das fein gemahlene Bauxit wird dabei mit NaOH versetzt, wobei sich Aluminiumhydroxide lösen können. Die unlöslichen Verbindungen verbleiben im Rückstand, dem Rotschlamm. Rotschlamm kann im Wesentlichen 30 bis 40 Gew.% Fe₂O₃, 20 bis 30 Gew.% Al₂O₃, 10 bis 17 Gew.% TiO₂, 5 bis 12 Gew.% SiO₂, 3 bis 6,5 Gew.% CaO und 1 bis 3 Gew.% Na₂O enthalten.

In einer weiteren bevorzugten Ausführungsform kann dem organischen Ausgangsprodukt auch ein Einsatzstoff zur Entfernung von organischen und anorganischen Halogenverbindungen wie Fluor,- Chlor-, Brom- und Iodverbindungen und/oder Schwefelverbindungen, die bei der Pyrolyse des organischen Ausgangsproduktes im Reaktor entstanden sind, zugesetzt werden. Anders gesagt, der Einsatzstoff kann als Adsorbens für die bei der Pyrolyse entstehenden Halogen- und/oder Schwefelverbindungen betrachtet werden. Sie können auf dieselbe Weise wie weitere bei der Pyrolyse zurückbleiben Reststoffe wie die kohlenstoffhaltige, künstliche Kohle (Koks) fortwährend aus dem Reaktor ausgetragen werden.

Beispiele für Einsatzstoffe zur Entfernung von organischen und anorganischen Halogen- und/oder Schwefelverbindungen sind Kaliziumhydroxid (Ca(OH)₂), Kalziumoxid (CaO), Kalziumcarbonat (CaCO₃), Ätznatron (NaOH), Soda (Na₂CO₃), Kaliumhydroxid (KOH), Pottasche (K₂CO₃), Hämatit (Fe₂O₃), Rotschlamm oder Mischung daraus.

In einer bevorzugten Ausführungsform wird Rotschlamm oder Hämatit, mehr bevorzugt Rotschlamm, dem organischen Ausgangsprodukt zugesetzt, da Rotschlamm sowohl als Katalysator wie auch als Einsatzstoff zur Entfernung von organischen und anorganischen Halogen- und/oder Schwefelverbindungen wirksam ist.

In einer bevorzugten Ausführungsform können organisches Ausgangsprodukt und Katalysator in dem Reaktor in einem Gewichtsverhältnis von 10:1 bis 1:2 eingesetzt werden.

In einer alternativen bevorzugten Ausführungsform wird dem organischen Ausgangsprodukt kein Katalysator zugesetzt. Das bedeutet, dass das erfindungsgemäße Verfahren auch in der Abwesenheit eines Katalysators durchgeführt werden kann.

In Schritt (b) wird das organische Ausgangsprodukt in einen Reaktor überführt, wobei dieser Schritt in der Abwesenheit von Sauerstoff durchgeführt wird.

Das Überführen des organischen Ausgangsprodukt in den Reaktor kann auf jede dem Fachmann bekannte Art und Weise durchgeführt werden. Hierzu können beispielsweise alle bekannten Überführungsvorrichtungen beziehungswiese Fördervorrichtungen verwendet werden, bevorzugt kann die Überführung des organischen Ausgangsproduktes durch eines oder mehrere Förderbänder durchgeführt werden. Weiterhin kann während der Überführung des Ausgangsproduktes Metall mit Hilfe eines Metallabscheiders abgeschieden werden. Durch die Abscheidung von in dem organischen Ausgangsprodukt möglicherweise verbliebenen Metallteilen durch den Metallabscheider kann ein Schutz von Anlagenteilen wie der Überführungsvorrichtung sowie ein störungsfreier oder - armer Betrieb des Verfahrens erreicht werden. Hierdurch kann eine erhöhte Beständigkeit einer Anlage, in welcher das erfindungsgemäße Verfahren durchgeführt wird, erreicht werden. Zudem wird durch das oben erwähnte Abscheiden von Metallteilen die Bildung von möglichen Nebenprodukten in Schritt (c), Erhitzen des Ausgangsproduktes unter Ausschluss von Sauerstoff, verhindert oder zumindest vorteilhaft reduziert.

In dem vorliegenden Verfahren wird das Überführen des organischen Ausgangsprodukts in den Reaktor in der Abwesenheit von Sauerstoff und unter Inertgas durchgeführt. Dies bedeutet im Rahmen der vorliegenden Erfindung, dass das organische Ausgangsprodukt beim Eintritt in den Reaktor bereits im Wesentlichen von Stauerstoff befreit wurde, der zum Beispiel in der umgebenden Atmosphäre, gewöhnlicherweise Luft, in den Zwischenräumen der einzelnen Ausgangsproduktstücke enthalten sein kann. Dies kann mit jedem dem Fachmann bekannten Evakuierungssystem zum Erzeugen eines Unterdrucks mit einer möglichen anschließenden Auflösung des Unterdrucks durch Einleitung von einem Inertgas, insbesondere Stickstoff, durchgeführt werden.

In einer bevorzugten Ausführungsform wird in Schritt (b) der Sauerstoff aus dem organischen Ausgangsprodukt befreit. Beispielsweise kann im vorliegenden Verfahren das organische Ausgangsprodukt auf einem Förderband über ein Doppelschleusensystem vom Sauerstoff befreit werden. Anders ausgedrückt, in dem vorliegenden Verfahren wird das organische Ausgangsprodukt durch die Evakuierung des das organische Ausgangsprodukt umgebenden Gases, insbesondere Luft, mittels einer Vakuumpumpe über zwei Schleusenkammern mit jeweils einem Doppelklappensystem vom Sauerstoff befreit. Anschließend kann das organische Ausgangsprodukt mit einem inerten Gas, vorzugsweise Stickstoff, vorzugsweise bis zum atmosphärischen Druck beaufschlagt werden. Dieser Vorgang kann mehrmals wiederholt werden, um möglichst viel Sauerstoff zu verdrängen. Der Eintrag des organischen Ausgangsproduktes in den Reaktor kann dann vorzugsweise über eine gekühlte Eintragsschnecke erfolgen. Damit wird der Eintrag des organischen Ausgangsprodukts in den Reaktor vorzugsweise druckfrei durchgeführt.

Im Rahmen des vorliegenden Verfahrens wird auch der Reaktor selbst vor dem Beginn des Überführens des organischen Ausgangsproduktes bzw. dem ersten Eintrag desselbigen in den Reaktor von Sauerstoff befreit und auf die gewünschte Temperatur gebracht. Hierzu wird der Reaktor beheizt und mit Inertgas, vorzugsweise Stickstoff, durchströmt. Vor Befüllen des Reaktors mit dem Einsatzstoff wird dieser mit dem Inertgas gespült, um einen möglichst vollständigen Sauerstoffausschluss und eine möglichst vollständige Befüllung mit Inertgas zu gewährleisten.

In Schritt (c) wird das organische Ausgangsprodukt erhitzt, um Pyrolysegas zu erzeugen. In einer bevorzugten Ausführungsform erfolgt Schritt (c) über das Erhitzen bzw. Beheizen des Reaktors. Hierzu wird der Reaktor direkt oder indirekt, vorzugsweise indirekt, beheizt. In einer bevorzugten Ausführungsform wird in Schritt (c) der Reaktor bevorzugt über eine Doppelwand indirekt beheizt. Die Beheizung des Reaktors über eine Doppelwand kann mit jeder dem Fachmann bekannten Heizvorrichtung durchgeführt werden. Vorzugsweise werden mithilfe von einem oder mehreren Heißgaserzeuger(n) die eine oder mehrere Heizzone(n) des Reaktors bis auf eine heizzonenspezifische, konstante Temperatur erhitzt, bei der dann die Pyrolyse des Ausgangsproduktes stattfindet. Diese Temperaturen liegen in Bereichen zwischen 400 °C bis 600 °C, vorzugsweise zwischen 450 °C und 580 °C, insbesondere zwischen 500 °C und 560 °C, besonders bevorzugt beträgt diese Temperatur etwa 550 °C.

In einer bevorzugten Ausführungsform können nach dem Erreichen der obengenannten Temperatur die nicht in Wasser löslichen Gase und nicht-kondensierbaren Gase aus dem Kopf der Kolonne und/oder die über eine Nachbrennkammer geleiteten Pyrolysegasen der Heizvorrichtung zugeführt werden, um damit den Reaktor zu beheizen, sodass das erfindungsgemäße Verfahren energieautark durchgeführt werden kann. Bevorzugt können die nicht in Wasser löslichen Gase und nicht-kondensierbaren Gase vor dem Zuführen zur Heizvorrichtung gereinigt werden, beispielweise durch einen Gaswäscher.

Die Heißgaserzeuger können alle dem Fachmann bekannten Vorrichtungen zum Erzeugen von hohen Temperaturen sein. Vorzugsweise besteht die Heißluftversorgung des Reaktors aus Gasbrennern und den jeweiligen Brennkammern. In den Kammern kann die Wärme der Flamme der Gasbrenner auf die Luft übertragen werden, sodass der Zwischenraum der Doppelwand des Reaktors in der jeweiligen Heizzone auf die gewünschte Temperatur erhitzt werden kann.

Zudem werden vorzugsweise im Reaktor die größeren Stücke des organischen Ausgangsproduktes, vorzugsweise mithilfe eines Rührwerks, durchmischt und der kohlenstoffhaltige Reststoff zum Austrag gefördert. Weiterhin bevorzugt wird das organische Ausgangsprodukt, vorzugsweise mithilfe eines Rührwerks, intensiv durchmischt, gegebenenfalls verdichtet sowie einem schnelleren Wärmeeintrag zugänglich gemacht. Zudem werden die Stücke des organischen Ausgangsprodukts dabei teilweise oder vollständig, vorzugsweise vollständig, in die gasförmige Phase überführt. Weiter bevorzugt wird das organische Ausgangsprodukt ebenfalls bevorzugt mithilfe eines Rührwerks auf eine möglichst große Innenfläche des Reaktors verteilt, so dass eine möglichst große Wärmeübertragung an der Reaktorseite der Doppelwand ermöglicht wird. Im hinteren Teil des Reaktors ist die Steigung beim Rührwerk geringer.

Die mittlere Verweilzeit des organischen Ausgangsmaterials im Reaktor bei dem oben erwähnten Temperaturbereich beträgt zwischen 15 und 120 Minuten, vorzugsweise zwischen 20 und 100 Minuten, insbesondere zwischen 30 und 90 Minuten, im Speziellen etwa 45 Minuten. Dabei findet eine thermische Spaltung unter Sauerstoffausschluss von Bindungen im organischen Ausgangsprodukt statt, wobei Pyrolysegas erzeugt wird. Eine thermische Spaltung unter Sauerstoffausschluss kann im Übrigen auch als Crack-Prozess bezeichnet werden.

Als Nebenprodukte können bei dem vorliegenden Verfahren Reststoffe, vorzugsweise feste Reststoffe, entstehen. Beispiele für feste Reststoffe, die bei dem vorliegenden Verfahren entstehen können, sind die oben erwähnte kohlenstoffhaltige künstliche Kohle sowie mögliche mineralische Bestandteile, die in dem organischen Ausgangsprodukt mitenthalten waren. Die Reststoffe können aus dem Reaktor ausgetragen werden, wobei dies im vorliegenden Verfahren so ausgeführt wird, dass beim Reststoffaustrag ein Sauerstoffeintrag in den Reaktor verhindert wird. Hierzu kann im vorliegenden Verfahren beispielsweise durch eine Pufferschurre die Ansammlung des Reststoffes (Aschehorizont) gewährleistet werden. Anschließend können die Reststoffe vorzugsweise unter Abkühlung beispielsweise über eine gekühlte Förderschnecke aus dem Reaktor ausgetragen werden. Durch die gekühlte Förderschnecke werden die Reststoffe abgekühlt, vorzugsweise bis auf Raumtemperatur abgekühlt. Durch die Kühlung kann vorzugsweise die Oxidation des im Reststoff enthaltenden Kohlenstoffs verhindert werden.

In einer bevorzugten Ausführungsform wird das in Schritt (c) erhaltene Pyrolysegas am oberen Ende des Reaktors entnommen und Schritt (d) unterworfen. Dies wird durchgeführt, um mögliche, unerwünschte weitere Nebenreaktionen zu vermeiden oder zumindest stark zu reduzieren. In einer bevorzugten Ausführungsform umfassen die entstandenen Pyrolysegase gasförmige Kohlenwasserstoffe. Weiterhin umfassen die entstandenen Pyrolysegase vorzugsweise keine Kohlenwasserstoffe in flüssiger oder fester Form.

In Schritt (d) wird das Pyrolysegas aus dem Reaktor über eine Verbindungsvorrichtung einer zwei- oder mehrteiligen Kolonne unter Erhalt von getrennten Fraktionen an Kohlenwasserstoffen zugeführt. Hierzu kann das Pyrolysegas aus dem Reaktorraum kontinuierlich einer zwei- oder mehrteiligen Kolonne, bevorzugt über einen isolierten Rohrkanal, zur Fraktionierung zugeführt werden.

Im vorliegenden Verfahren ist die zwei- oder mehrteilige Kolonne bevorzugt als zweiteilige Kolonne ausgestaltet. In einer bevorzugten Ausführungsform ist der erste Teil der Kolonne zwischen dem Reaktor bzw. dem isolierten Rohrkanal und dem zweiten Teil der Kolonne angeordnet und kann als unterer Teil der zwei- oder mehrteiligen Kolonne betrachtet werden. Der zweite Teil der Kolonne ist oberhalb des ersten Teils der zwei- oder mehrteiligen Kolonne angeordnet. Folglich wird er auch als oberer Teil der Kolonne bezeichnet. Bevorzugt sind der erste (untere) und zweite (obere) Teil der Kolonne fluiddicht, also sowohl gas- als auch flüssigkeitsdicht, miteinander verbunden. Im vorliegenden Verfahren kann diese fluiddichte Verbindung bevorzugt als isolierte Rohrleitung oder Flanschverbindung ausgestaltet sein, insbesondere als isolierte Rohrleitung.

Beim vorliegenden Verfahren wird beim Zuführen des Pyrolysegases in die zwei- oder mehrteilige Kolonne das Gas abgekühlt und seine Komponenten je nach Siedebereich fraktionierend verflüssigt. Die Entnahme der einzelnen Fraktionen der fraktionierend verflüssigten Komponenten kann beispielsweise mithilfe von Regelventilen gewährleistet werden. Anders gesagt, durch Zuführen des Pyrolysegases in die zwei- oder mehrteilige Kolonne wird dieses einer (fraktionierenden) Kondensation unterworfen, bei der die verschiedenen Fraktionen getrennt voneinander erhalten werden.

In einer bevorzugten Ausführungsform ist der erste (untere) Teil der zwei- oder mehrteiligen Kolonne, bevorzugt der zweiteiligen Kolonne, eine Quenchkolonne. Wie obenstehend beschrieben, wird bei dem vorliegenden Verfahren das Pyrolysegas kontinuierlich aus dem Reaktor der zwei- oder mehrteiligen Kolonne und damit der Quenchkolonne zugeführt. Die Quenchkolonne kann eine gewöhnliche Destillationskolonne oder eine Rektifikationskolonne sein. Eine Rektifikationskolonne ist eine Destillationskolonne, bei der zur Intensivierung des Wärme- und Stoffaustausches zwischen Gas- und Flüssigphase der Kolonnenkörper mit Einbauten (auch Trennböden genannt) versehen ist. Im vorliegenden Verfahren enthält eine Rektifikationskolonne mehrere Trennböden, vorzugsweise 10 bis 30 Trennböden, insbesondere etwa 15 Trennböden. Zudem wird die Quenchkolonne vorzugsweise unter leichtem Unterdruck betrieben, insbesondere bei einem Kopfdruck von 0,75 bis 0,85 bar, bevorzugt ca. 0,8 bar. Innerhalb der Quenchkolonne wird vorzugsweise die Temperatur des Pyrolysegases auf 280 °C bis 320 °C, insbesondere auf ca. 300 °C reduziert. Für die Abkühlung des Pyrolysegases kann unter anderem das flüssige Sumpfprodukt der zweiten, oberen Kolonne verwendet werden. Die Quenchkolonne ist darüber hinaus noch vorzugsweise mit einer oder mehreren Temperaturmessstellen zur Kontrolle des ordnungsgemäßen Ablaufs des vorliegenden Verfahrens ausgestattet.

Der zweite Teil der zwei- oder mehrteiligen Kolonne, bevorzugt der zweiteiligen Kolonne, ist eine Rektifikationskolonne. Die Rektifikationskolonne im zweiten (oberen) Teil der zwei- oder mehrteiligen Kolonne verfügt bevorzugt über mehrere Trennböden, bevorzugt 10 bis 40 Trennböden, mehr bevorzugt 20 bis 35 Trennböden, insbesondere etwa 30 Trennböden. Das bei seinem Weg durch die Quenchkolonne abgekühlte Gas strömt durch die gasdichte Verbindung der ersten und zweiten Kolonne in die zweite Kolonne, die Rektifikationskolonne. Ebenso wie die erste Kolonne (Quenchkolonne) wird die Rektifikationskolonne vorzugsweise unter leichtem Unterdruck betrieben, insbesondere bei einem Kopfdruck von 0,75 bis 0,85 bar, bevorzugt ca. 0,8 bar.

Sowohl im ersten (unteren) Teil als auch im zweiten (oberen) Teil der zweiteiligen Kolonne kann sich an den Einbauten wie den Trennböden ein Gleichgewicht zwischen der flüssigen und gasförmigen Phase der entsprechenden Fraktion einstellen. In anderen Worten können auf diese Weise an unterschiedlichen Trennböden in der bevorzugt zweiteiligen Kolonne getrennte, flüssige Kohlenwasserstoffe erhalten werden, bevorzugt fraktionsweise erhalten werden, wobei dieser Erhalt und die Trennung durch den unterschiedlichen Siedebereich der entsprechenden Fraktionen erreicht werden.

In dem vorliegenden Verfahren ist im ersten Teil der zwei- oder mehrteiligen Kolonne die Strömungsgeschwindigkeit des Pyrolysegases geringer als in dem darauffolgenden zweiten Teil der zwei- oder mehrteiligen Kolonne. Besonders bevorzugt ist, dass im ersten Teil der bevorzugt zweiteiligen Kolonne die Strömungsgeschwindigkeit des Pyrolysegases geringer ist als in dem darauffolgenden zweiten Teil der bevorzugt zweiteiligen Kolonne. Durch die geringere Strömungsgeschwindigkeit im ersten Teil der Kolonne kann ein Reinigungseffekt des Pyrolysegases erreicht werden. So werden beispielsweise keine Staubteilchen oder Asche in den zweiten (oberen) Teil der bevorzugt zweiteiligen Kolonne mitgerissen.

In einer Ausführungsform des vorliegenden Verfahrens wird in Schritt (d) Wasser, beispielsweise bei der Pyrolyse entstandenes oder im organischen Ausgangsprodukt bereits enthaltenes Wasser, über Phasentrennung von den Kohlenwasserstoffen abgetrennt. In dieser Wasserphase können sich vorzugsweise Schadstoffe wie saure Verbindungen, leichtflüchtige Schwermetalle, beispielsweise Quecksilber, und Halogene, beispielsweise Chlor anreichern, was zu einem geringeren Anteil an diesen Stoffen bei den nachfolgenden Fraktionen ("Schadstoffentfrachtung") führt. Hierzu kann ein dem Fachmann bekannter Phasenabscheider eingesetzt werden. Das abgetrennte Wasser kann vorzugsweise einer Wasseraufbereitung zugeführt werden, wo die Schadstoffe abgetrennt werden.

In Schritt (e) werden die in Schritt (d) erhaltenen getrennten, vorzugsweise flüssigen Kohlenwasserstoffe gewonnen. Das bedeutet, dass die getrennten vorzugsweise flüssigen Kohlenwasserstoffe aus der bevorzugt zweiteiligen Kolonne über ein Ausleitungssystem ausgeleitet werden und gegebenenfalls weiterverarbeitet oder gereinigt werden. Die nach dem Ausleiten aus der bevorzugt zweiteiligen Kolonne gewonnenen Kohlenwasserstoffe sind bei 23 °C (Raumtemperatur) und 101,325 kPa (Normaldruck) bevorzugt in flüssiger Form. Alternativ bevorzugt, können sich die Kohlenwasserstoffe nach dem Ausleiten aus der bevorzugt zweiteiligen Kolonne, insbesondere aus dem ersten Teil der bevorzugt zweiteiligen Kolonne, verfestigen, so dass sie als halbfester Stoff oder in fester Form vorliegen können. Ein halbfester Stoff ist ein Stoff, der in einem Zustand zwischen dem festen und flüssigen Zustand ist, beispielweise ein Wachs wie Paraffinwachs. Diese Stoffe werden vorzugsweise im warmen, flüssigen Zustand der Lagerung zugeführt.

Hierzu kann der erste Teil (Quenchkolonne) der bevorzugt zweiteiligen Kolonne mit einem oder mehreren Regelventilen als Ausleitungssystem ausgestattet sein, durch welche Fraktionen mit einem Siedebereich von mehr als 300 °C und weniger als 500 °C ausgeleitet/entnommen werden können. In einer bevorzugten Ausführungsform wird eine Fraktion mit einem Siedebereich von der Eintrittstemperatur des Pyrolysegases (Synthesegases) bis ca. 320 °C entnommen. Diese Fraktion kann Kohlenwasserstoffe mit bis zu 75 Kohlenstoffatomen enthalten. Beispiele dafür sind Schweröle/Paraffine. Aufgrund der hohen Temperatur im Sumpf der Quenchkolonne wird das Sumpfprodukt vorzugsweise beim Befüllen der Produktlagertanks abgekühlt.

Weiterhin kann der zweite Teil (Rektifikationskolonne) der bevorzugt zweiteiligen Kolonne, einen oder mehrere Temperaturfühler umfassen, welche die Temperatur des Sumpfes, der einzelnen Böden sowie des Kopfes in der Rektifikationskolonne überwachen können. Wie die Quenchkolonne kann auch die Rektifikationskolonne mit einem oder mehreren Regelventilen ausgestattet sein, durch die einzelne Fraktionen in den gewünschten Bereichen entnommen werden können. In einer bevorzugten Ausführungsform wird eine Fraktion mit einem Siedebereich von 220 °C bis 320 °C entnommen. Diese Fraktion kann Kohlenwasserstoffe mit 7 bis 22 Kohlenstoffatomen enthalten. Beispiele dafür sind Dieselkraftstoffe. Ebenfalls bevorzugt kann eine Fraktion mit einem Siedebereich von 150 °C bis 200 °C entnommen werden. Diese Fraktion kann Kohlenwasserstoffe mit 5 bis 9 Kohlenstoffatomen enthalten. Beispiele dafür sind Benzinkraftstoffe.

Zudem wird bevorzugt der nach Durchlaufen der bevorzugt zweiteiligen Kolonne noch gasförmige Teil des Pyrolyseproduktes (gasförmiges Kopfprodukt) über ein Zuführungssystem einem Hauptkondensator zugeführt, der unter Abkühlung weitere Fraktionen des Pyrolysegases kondensiert/verflüssigt. Diese verflüssigte/kondensierte Fraktion kann bevorzugt ebenfalls über ein Regelventil entnommen werden. Bevorzugt wird eine Fraktion mit einem Siedebereich von 50 °C bis 150 °C entnommen. Diese Fraktion wird auch als Kopffraktion bezeichnet und kann aliphatische oder aromatische Kohlenwasserstoffe mit 1 bis 10 Kohlenstoffatomen, bevorzugt mit 2 bis 9 Kohlenstoffatomen, insbesondere mit 5 bis 7 Kohlenstoffatomen, enthalten. Beispiele hierfür sind Alkane wie Pentan, Hexan, Heptan, Oktan und Alkene wie Pentene, Hexene, Heptene, Oktene. Weitere Beispiele sind Cycloalkane wie Cylopentan, Cyclohexan, Cycloheptan und Cycloalkene wie Cyclohexen und Cyclohepten sowie aromatische Verbindungen wie Benzol, Toluol, o-Xylol, m-Xylol und p-Xylol.

Dem Hauptkondensator können optional weitere Nebenkondensatoren inklusive ihrer Zuführungssysteme nachgeschaltet sein, die auf einer im Wesentlichen gleichen Wirkungsweise, im Wesentlichen dem Abführen der Kondensationswärme, beruhen.

Das im Reaktor erzeugte Pyrolysegas kann weiterhin gasförmige Bestandteile enthalten, welche nicht nur die bevorzugt zweiteilige Kolonne, sondern auch den Hauptkondensator und optionale weitere Nebenkondensatoren passieren können, ohne darin kondensiert/verflüssigt zu werden. Damit können diese Gase auch nicht in flüssiger Form aus der Kolonne, dem Hauptkondensator und/oder weiteren optionalen Nebenkondensator/en ausgeleitet/entnommen werden und verlassen den Hauptkondensator oder die weiteren optionalen Nebenkondensatoren in einem weiterhin gasförmigen Zustand. Diese Bestandteile des Pyrolysegases werden als Off-Gase bezeichnet und enthalten bevorzugt Kohlenwasserstoffe, vorzugsweise Kohlenwasserstoffe mit 1 bis 5 Kohlenstoffatomen. Beispiele für Bestandteile des Off-Gases sind Methan, Ethan, Ethen, Propan, Propen, n-Butan, Isobutan, Isobuten, 1-Buten, 2-Buten, 2,2-Dimethylpropan, Cyclopropan und Cyclopropen.

In einer bevorzugten Ausführungsform kann das über den Hauptkondensator und einen oder mehrere optionale Nebenkondensator(en) entweichende Off-Gas über ein Leitungssystem dem oben erwähnten Gasbrenner zur Beheizung des Reaktors zugeleitet werden. In einer bevorzugten Ausführungsform wird das Off-Gas nach Verlassen des letzten Kondensators einem Reinigungsschritt zur Entfernung von Schadstoffen unterzogen. Hierzu können dem Fachmann bekannte Reinigungsvorrichtungen für Gase, wie Gaswäscher, verwendet werden. Durch das Zuleiten des Off-Gases über ein Leitungssystem zu dem Gasbrenner zur Beheizung des Reaktors wird das vorliegende Verfahren nach einen Anfahrprozess energieautark. Gemäß einer weiteren Ausführungsform können die Kondensatoren durch die Einstellung einer entsprechenden Kühltemperatur so betrieben werden, dass die Fraktion der Off-Gase in ihrer Zusammensetzung variiert und dadurch der Heizwert dieser Off-Gase eingestellt werden kann. Durch dieses Off-Gas kann das erfindungsgemäße Verfahren wie oben beschrieben energieautark betrieben werden und/oder beispielsweise mit Hilfe eines Gasmotors elektrische Energie (Strom) und Wärme gewonnen werden.

Ein weiterer Gegenstand der vorliegenden Erfindung ist eine Vorrichtung zum Ausführen des erfindungsgemäßen Verfahrens.

Die erfindungsgemäße Vorrichtung umfasst
(1) eine Überführungsvorrichtung beziehungsweise Fördervorrichtung für das organische Ausgangsprodukt
(2) einen Reaktor
(3) eine Heizvorrichtung
(4) Verbindungsvorrichtung zwischen Reaktor und zwei- oder mehrteiliger Kolonne
(5) zwei- oder mehrteilige Kolonne
(6) Ausleitungs- bzw. Entnahmesystem für flüssige Kohlenwasserstoffe
(7) Zuführungssystem
(8) Hauptkondensator
wobei der Durchmesser des ersten Teils der zwei- oder mehrteiligen Kolonne größer ist als der Durchmesser des darauffolgenden zweiten Teils der zwei- oder mehrteiligen Kolonne, und wobei der zweite Teil der zwei- oder mehrteiligen Kolonne eine Rektifikationskolonne ist.

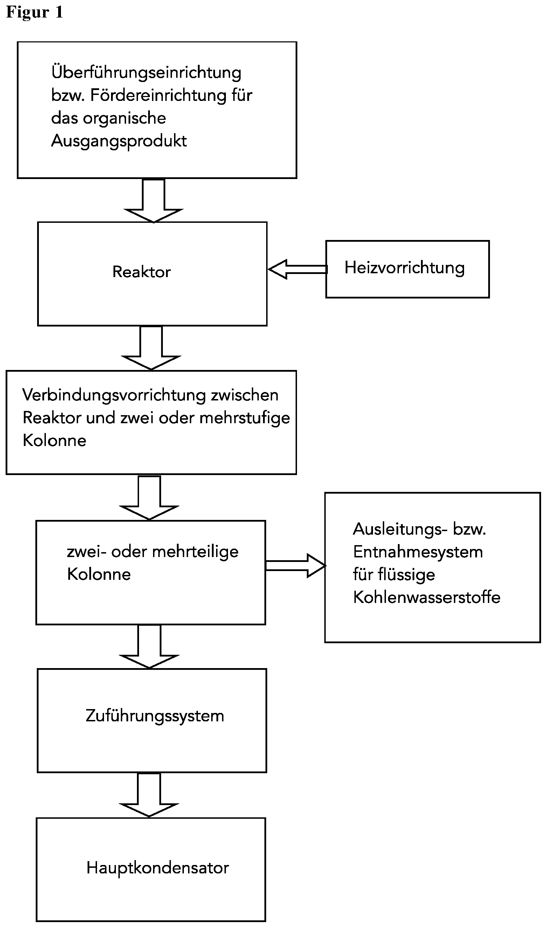

Figur 1 zeigt das Blockdiagramm einer erfindungsgemäßen Vorrichtung.

Die Überführungsvorrichtung beziehungsweise Fördervorrichtung überführt das Ausgangsprodukt in den Reaktor. In einer bevorzugten Ausführungsform kann die Überführungsvorrichtung ein Förderband sein, welches vorzugsweise einen Metallabscheider umfasst.

Zudem umfasst die Überführungsvorrichtung ein System, mit welchem sichergestellt wird, dass das Überführen des organischen Ausgangsprodukts in den Reaktor in Abwesenheit von Sauerstoff durchgeführt werden kann. Dieses System kann beispielsweise ein Evakuierungssystem zum Erzeugen eines Unterdrucks mit einer möglichen anschließenden Auflösung des Unterdrucks durch Einleitung von einem Inertgas, insbesondere Stickstoff, sein. In einer bevorzugten Ausführungsform ist das System ein Doppelschleusensystem, welches über zwei Schleusenkammern mit je einem Doppelklappensystem verfügt.

Weiterhin kann die Überführungsvorrichtung vorzugsweise eine Kühlvorrichtung aufweisen, um den Eintrag des organischen Ausgangsproduktes in den Reaktor auf einer gekühlten Überführungsvorrichtung zu ermöglichen, wodurch vorzugsweise ein Schmelzen des Ausgangsprodukts verhindert werden kann.

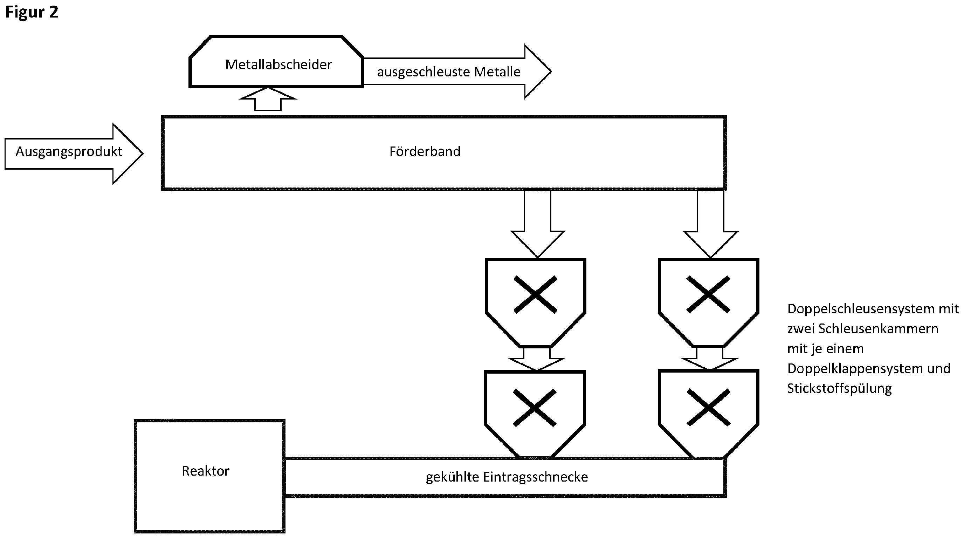

Figur 2 zeigt eine Ausführungsform einer Überführungsvorrichtung bis zum Reaktor.

In dem Reaktor wird das Ausgangsprodukt erhitzt, um Pyrolysegas zu erzeugen. Bevorzugt wird der Reaktor über eine Doppelwand indirekt erhitzt. Zudem umfasst der Reaktor vorzugsweise ein Rührwerk, mit welchem das organische Ausgangsprodukt zerkleinert, durchmischt und/oder auf eine möglichst große Innenfläche des Reaktors verteilt werden kann. Zur intensiven Durchmischung zum schnelleren Wärmeeintrag und zur Verdichtung des eingesetzten Materials ist das Rührwerk vorzugsweise so ausgestaltet, dass der vordere Teil des Rührwerks eine andere Steigung, bevorzugt stärkere Steigung, als der hintere Teil aufweist.

Die Beheizung des Reaktors kann mit jeder dem Fachmann bekannten Heizvorrichtung durchgeführt werden. Vorzugsweise ist die Heizvorrichtung ein Heißgaserzeuger, insbesondere ein oder mehrere Gasbrenner mit den jeweiligen Brennkammern.

Das im Reaktor hergestellte Pyrolysegas wird über eine Verbindungsvorrichtung der zwei- oder mehrteiligen Kolonne zugeführt. In anderen Worten bedeutet das, dass der Reaktor über eine Verbindungsvorrichtung mit der zwei- oder mehrteiligen Kolonne verbunden ist, und dass das Pyrolysegas aus dem Reaktor durch/über diese Verbindungsvorrichtung der zwei- oder mehrteiligen Kolonne zugeführt wird. In einer bevorzugten Ausführungsform ist diese Verbindungseinrichtung ein Rohrkanal, bevorzugt ein isolierter Rohrkanal.

Die zwei- oder mehrteilige Kolonne ist bevorzugt eine zweiteilige Kolonne, wobei die beiden Kolonen bevorzugt fluiddicht verbunden sind. Die fluiddichte Verbindung ist bevorzugt eine isolierte Rohrleitung oder Flanschverbindung, insbesondere als Rohrleitung.

Der erste (untere) Teil der bevorzugt zweiteiligen Kolonne ist bevorzugt eine Quenchkolonne, welche eine gewöhnliche Destillationskolonne oder eine Rektifikationskolonne sein kann, vorzugsweise eine Rektifikationskolonne. Die vorzugsweise als Rektifikationskolonne ausgestaltete Quenchkolonne kann mehrere Trennböden enthalten, vorzugsweise 10 bis 30 Trennböden. Die Quenchkolonne ist vorzugsweise mit einer oder mehreren Temperaturmessstellen versehen.

Der zweite (obere) Teil der bevorzugt zweiteiligen Kolonne ist eine Rektifikationskolonne. Die Rektifikationskolonne im zweiten (oberen) Teil der bevorzugt zweiteiligen Kolonne verfügt bevorzugt über mehrere Trennböden, bevorzugt 10 bis 40 Trennböden, mehr bevorzugt 20 bis 35 Trennböden, insbesondere etwa 30 Trennböden.

Der Durchmesser des ersten (unteren) Teils der bevorzugt zweiteiligen Kolonne ist größer als der Durchmesser des darauffolgenden zweiten (oberen) Teils der bevorzugt zweiteiligen Kolonne. Durch diese Ausgestaltung kann erreicht werden, dass im ersten Teil der bevorzugt zweiteiligen Kolonne die Strömungsgeschwindigkeit des Pyrolysegases geringer ist als in dem darauffolgenden zweiten Teil der bevorzugt zweiteiligen Kolonne.

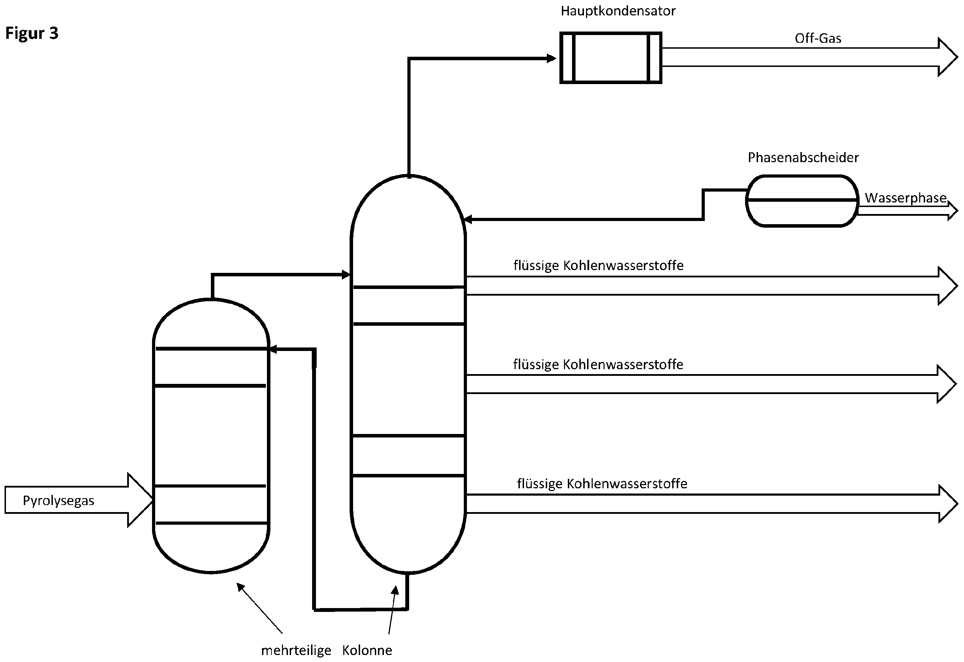

Figur 3 zeigt eine Ausführungsform einer zwei- oder mehrteiligen Kolonne mit Kühlkreislauf.

Die untere Kolonne der bevorzugt zweiteilige Kolonne enthält bevorzugt ein Ausleitungs- bzw. Entnahmesystem, über das Fraktionen von flüssigen Kohlenwasserstoffen ausgeleitet/entnommen werden können. Dasselbe gilt für die obere Kolonne der bevorzugt zweiteiligen Kolonne. Das Ausleitungssystem sowohl des unteren als auch des oberen Teils der bevorzugt zweiteiligen Kolonne kann bevorzugt als Regelventil ausgestalten sein.

Die erfindungsgemäße Vorrichtung umfasst weiterhin ein Zuführungssystem, welches zwischen dem Kolonnenkopf des zweiten (oberen) Teils der bevorzugt zweiteiligen Kolonne und dem Hauptkondensator angeordnet ist. Über das Zuführsystem werden in der bevorzugt zweiteiligen Kolonne nicht verflüssigte/kondensierte Bestandteile des Pyrolysegases einem Hauptkondensator zugeführt. Das Zuführungssystem kann eine Leitung oder ein Stutzen sein, bevorzugt ein Stutzen.

Der Hauptkondensator ist ein Kondensator, in dem unter Kühlung weitere Fraktionen des Pyrolysegases verflüssigt werden können. Er ist bevorzugt mit einem Regelventil zur Entnahme der verflüssigten Fraktionen ausgestattet.

Dem Hauptkondensator können optional weitere Nebenkondensatoren inklusive ihrer Zuführungssysteme nachgeschaltet sein, die auf einer im Wesentlichen gleichen Wirkungsweise beruhen. In einer bevorzugten Ausführungsform umfasst die erfindungsgemäße Vorrichtung zwei Nebenkondensatoren, wobei der zweite Nebenkondensator zur Kondensation eine Kühlung mit geringerer Temperatur als der erste, zwischen dem Haupt- und dem zweiten Nebenkondensator angeordnete Nebenkondensator aufweist.

Die erfindungsgemäße Vorrichtung kann weiterhin bevorzugt ein Leitungssystem umfassen, mit dem aus dem Hauptkondensator oder aus einem optionalen Nebenkondensator nicht kondensiertes Off-Gas der Heizvorrichtung, bevorzugt dem oben erwähnten Gasbrenner, zur Beheizung des Reaktors oder einem Gasmotor zur Erzeugung von elektrischer Energie (Strom) und Wärme zugeleitet werden kann. In einer bevorzugten Ausführungsform der erfindungsgemäßen Vorrichtung kann in diesem Leitungssystem eine Reinigungsvorrichtung für Gase angeordnet sein. Reinigungsvorrichtungen für Gase sind dem Fachmann bekannt. Ein Beispiel ist ein Gaswäscher. Mit Hilfe dieser Reinigungsvorrichtung für Gase können aus dem Off-Gas Schadstoffe entfernt werden, bevor sie dem obenerwähnten Gasbrenner oder einem Gasmotor zugeführt werden.

## Patentansprüche

1. Kontinuierliches Verfahren zur Herstellung von Kohlenwasserstoffen umfassend die Schritte
(a) Bereitstellen eines organischen Ausgangsprodukts,
(b) Überführen des organischen Ausgangsprodukts in einen Reaktor,
(c) Erhitzen des Ausgangsprodukts, um ein Pyrolysegas zu erzeugen,
(d) Zuführen des Pyrolysegases einer zwei- oder mehrteiligen Kolonne unter Erhalt von getrennten flüssigen und/oder halbfesten Fraktionen an Kohlenwasserstoffen,
(e) Gewinnen der in Schritt (d) erhaltenen getrennten Kohlenwasserstoffe,
wobei Schritte (b) und (c) in der Abwesenheit von Sauerstoff und unter Inertgas durchgeführt werden,
wobei in Schritt (c) das Ausgangsprodukt auf 400 °C bis 600 °C erhitzt wird,
wobei im ersten Teil der zwei- oder mehrteiligen Kolonne die Strömungsgeschwindigkeit des Pyrolysegases geringer ist als in dem darauffolgenden zweiten Teil der zwei- oder mehrteiligen Kolonne,
wobei das Ausgangsprodukt ein Kunststoff oder eine Mischung von Kunststoffen ist, und
wobei der zweite Teil der zwei- oder mehrteiligen Kolonne eine Rektifikationskolonne ist.

2. Verfahren gemäß Anspruch 1, wobei die in Schritt (e) erhaltenen Kohlenwasserstoffe aliphatische und aromatische Kohlenwasserstoffe mit 6 bis 30 Kohlenstoffatomen sind.

3. Verfahren gemäß Anspruch 1 oder 2, wobei dem Ausgangsprodukt ein Katalysator zugesetzt wird.

4. Verfahren gemäß einem der Ansprüche 1 bis 3, wobei in Schritt (b) der Sauerstoff aus dem Ausgangsprodukt entfernt wird.

5. Verfahren gemäß Anspruch 3 und/oder 4, wobei der Katalysator eine aluminium-haltige Verbindung umfasst.

6. Verfahren gemäß einem der Ansprüche 1 bis 5, wobei Schritt (c) über das Erhitzen des Reaktors erfolgt.

7. Verfahren gemäß einem der Ansprüche 1 bis 6, wobei die mittlere Verweilzeit des Ausgangsprodukts in Schritt (c) 20 bis 100 Minuten beträgt.

8. Verfahren gemäß einem der Ansprüche 1 bis 7, wobei das in Schritt (c) erhaltene Pyrolysegas am oberen Ende des Reaktors entnommen und Schritt (d) unterworfen wird.

9. Verfahren gemäß einem der Ansprüche 1 bis 8, wobei der erste Teil der zwei- oder mehrteiligen Kolonne eine Quenchkolonne ist.

10. Verfahren gemäß einem der Ansprüche 1 bis 9, wobei in Schritt (d) Wasser über Phasentrennung von den Kohlenwasserstoffen abgetrennt wird.

11. Vorrichtung zum Ausführen des Verfahrens gemäß einem der Ansprüche 1 bis 10, wobei die Vorrichtung umfasst
(1) eine Überführungsvorrichtung beziehungsweise Fördervorrichtung für das organische Ausgangsprodukt
(2) einen Reaktor
(3) eine Heizvorrichtung
(4) eine Verbindungsvorrichtung zwischen Reaktor und zwei- oder mehrteiliger Kolonne
(5) zwei- oder mehrteilige Kolonne
(6) Ausleitungs- bzw. Entnahmesystem für flüssige Kohlenwasserstoffe
(7) Zuführungssystem
(8) Hauptkondensator,
wobei der Durchmesser des ersten Teils der zwei- oder mehrteiligen Kolonne größer ist als der Durchmesser des darauffolgenden zweiten Teils der zwei- oder mehrteiligen Kolonne, und
wobei der zweite Teil der zwei- oder mehrteiligen Kolonne eine Rektifikationskolonne ist.

## Claims

1. A continuous process for the production of hydrocarbons comprising the steps of
(a) providing an organic starting product,
(b) transferring the organic starting product to a reactor,
(c) heating the starting product to generate a pyrolysis gas,
(d) feeding the pyrolysis gas to a two-part or multi-part column to obtain separate liquid and/or semi-solid fractions of hydrocarbons,
(e) recovering the separated hydrocarbons obtained in step (d),
wherein steps (b) and (c) are carried out in the absence of oxygen and under inert gas,
wherein in step (c) the starting product is heated to 400°C to 600°C,
wherein in the first part of the two-part or multi-part column the flow rate of the pyrolysis gas is lower than in the subsequent second part of the two-part or multi-part column,
wherein the starting product is a plastic or a mixture of plastics, and
wherein the second part of the two-part or multi-part column is a rectification column.

2. The process according to claim 1, wherein the hydrocarbons obtained in step (e) are aliphatic and aromatic hydrocarbons having from 6 to 30 carbon atoms.

3. The process according to claim 1 or 2, wherein a catalyst is added to the starting product.

4. The process according to any one of claims 1 to 3, wherein in step (b) the oxygen is removed from the starting product.

5. The process according to claim 3 and/or 4, wherein the catalyst comprises an aluminum containing compound.

6. The process according to any one of claims 1 to 5, wherein step (c) is carried out via heating the reactor.

7. The process according to any one of claims 1 to 6, wherein the average residence time of the starting product in step (c) is 20 to 100 minutes.

8. The process according to any one of claims 1 to 7, wherein the pyrolysis gas obtained in step (c) is taken from the top of the reactor and subjected to step (d).

9. The process according to any one of claims 1 to 8, wherein the first part of the two-part or multi-part column is a quench column.

10. The process according to any one of claims 1 to 9, wherein in step (d) water is separated from the hydrocarbons via phase separation.

11. Apparatus for carrying out the process according to any one of claims 1 to 10, the apparatus comprising.
(1) a transfer device or conveying device for the organic starting product
(2) a reactor
(3) a heating device
(4) a connecting device between the reactor and the two-part or multi-part column
(5) a two-part or multi-part column
(6) a liquid hydrocarbon discharge or removal system
(7) a feed system,
(8) a main condenser,
wherein the diameter of the first part of the two-part or multi-part column is larger than the diameter of the subsequent second part of the two-part or multi-part column, and
wherein the second part of the two-part or multi-part column is a rectification column.

## Revendications

1. Procédé continu de production d'hydrocarbures, comportant les étapes consistant à :
(a) fournir un produit de départ organique,
(b) transférer le produit de départ organique dans un réacteur,
(c) chauffer le produit de départ afin de générer un gaz de pyrolyse,
(d) acheminer le gaz de pyrolyse jusqu'à une colonne en deux parties ou plus pour obtenir des fractions d'hydrocarbures liquides et/ou semi-solides séparées,
(e) récupérer les hydrocarbures séparés obtenus à l'étape (d),
dans lequel les étapes (b) et (c) sont réalisées en l'absence d'oxygène et sous gaz inerte,
dans lequel à l'étape (c), le produit de départ est chauffé à 400 °C jusqu'à 600 °C,
dans lequel dans la première partie de la colonne en deux parties ou plus, la vitesse d'écoulement du gaz de pyrolyse est inférieure à celle dans la seconde partie suivante de la colonne en deux parties ou plus,
dans lequel le produit de départ est une matière plastique ou un mélange de matières plastiques, et
dans lequel la seconde partie de la colonne en deux parties ou plus est une colonne de rectification.

2. Procédé selon la revendication 1, dans lequel les hydrocarbures obtenus à l'étape (e) sont des hydrocarbures aliphatiques et aromatiques possédant 6 à 30 atomes de carbone.

3. Procédé selon la revendication 1 ou 2, dans lequel un catalyseur est ajouté au produit de départ.

4. Procédé selon l'une des revendications 1 à 3, dans lequel à l'étape (b), l'oxygène est retiré du produit de départ.

5. Procédé selon la revendication 3 et/ou 4, dans lequel le catalyseur comprend un composé contenant de l'aluminium.

6. Procédé selon l'une des revendications 1 à 5, dans lequel l'étape (c) s'effectue par le chauffage du réacteur.

7. Procédé selon l'une des revendications 1 à 6, dans lequel le temps de séjour moyen du produit de départ à l'étape (c) est de 20 à 100 minutes.

8. Procédé selon l'une des revendications 1 à 7, dans lequel le gaz de pyrolyse obtenu à l'étape (c) est prélevé à l'extrémité supérieure du réacteur et soumis à l'étape (d).

9. Procédé selon l'une des revendications 1 à 8, dans lequel la première partie de la colonne en deux parties ou plus est une colonne d'arrêt de réaction.

10. Procédé selon l'une des revendications 1 à 9, dans lequel à l'étape (d), l'eau est séparée des hydrocarbures par séparation de phases.

11. Dispositif pour mettre en oeuvre le procédé selon l'une des revendications 1 à 10, dans lequel le dispositif comprend :
(1) un dispositif de transfert ou un dispositif de convoyage pour le produit de départ organique
(2) un réacteur
(3) un dispositif de chauffage
(4) un dispositif de liaison entre le réacteur et la colonne en deux parties ou plus
(5) une colonne en deux parties ou plus
(6) un système d'évacuation ou de prélèvement pour des hydrocarbures liquides
(7) un système d'alimentation
(8) un condenseur principal,
dans lequel le diamètre de la première partie de la colonne en deux parties ou plus est supérieur au diamètre de la seconde partie suivante de la colonne en deux parties ou plus, et
dans lequel la seconde partie de la colonne en deux parties ou plus est une colonne de rectification.
